# EUROPEAN PATENT APPLICATION

(11) **EP 2 511 825 A1**
(43) Date of publication of application: **17.10.2012**
(21) Application number: 11777259.0
(22) Date of filing: 28.05.2011
(51) Int. Cl.: G06F 12/06

(54) **METHOD AND DEVICE FOR CONFIGURING MEMORY CAPACITY**

(71) Applicant: Huawei Device Co., Ltd., Longgang District Shenzhen Guangdong 518129 (CN)
(72) Inventor: HUANG, Zhikui, Guangdong 518129 (CN); LI, Yaobing, Guangdong 518129 (CN); ZHOU, Jian, Guangdong 518129 (CN)
(74) Representative: Schmitz, Alexander
(86) International application number: PCT/CN2011/074834
(87) International publication number: WO 2011/137840

(57) **Abstract**

The present invention discloses a method and a device for configuring memory capacity, which relates to the field of computer technologies, so as to solve the problem of complex operations of a method for configuring memory capacity in the prior art. A technical solution provided in an embodiment of the present invention includes: performing a first read/write operation on data in a first memory space; if a system status does not change during the first read/write operation, performing a second read/write operation on data in a second memory space obtained by updating the first memory space; if the system status changes during the first/second read/write operation, obtaining a memory address when the system status changes; and configuring the memory capacity according to the memory address. Embodiments of the present invention may be applied in an embedded system or a computer.

## Description

### FIELD OF THE INVENTION

The present invention relates to the field of computer technologies, and in particular, to a method and a device for configuring memory capacity.

### BACKGROUND OF THE INVENTION

Memory, as one of indispensable members in a system, has great influence on the overall efficiency of the system. In order to meet the requirements such as mapping and read/write that are imposed by the system on the memory, the memory capacity of the system needs to be configured in advance. In the prior art, a method for configuring the memory capacity includes: first, reading, by system software, information provided by a hardware interface; and then configuring the memory capacity of the system according to the read information.

In the process of implementing the configuration of the memory capacity, the inventors find that the prior art at least has the following problems: when system hardware is changed, in order to read information provided by a changed hardware interface, the system software needs to be changed correspondingly, and the operation is complex.

### SUMMARY OF THE INVENTION

Embodiments of the present invention provide a method and a device for configuring memory capacity, so as to solve the problem of complex operation.

In one aspect, a method for configuring memory capacity is provided, which includes: performing a first read/write operation on data in a first memory space; if system status does not change during the first read/write operation, performing a second read/write operation on data in a second memory space obtained by updating the first memory space; if the system status changes during the first/second read/write operation, obtaining a memory address when the system status changes; and configuring the memory capacity according to the memory address.

In another aspect, a device for configuring memory capacity is provided, which includes:
a first read/write module, adapted to perform a first read/write operation on data in a first memory space;
a second read/write module, adapted to, if system status does not change during the first read/write operation performed by the first read/write module, perform a second read/write operation on data in a second memory space obtained by updating the first memory space;
an address obtaining module, adapted to, if the system status changes during the first/second read/write operation, obtain a memory address when the system status changes; and
a capacity configuration module, adapted to configure the memory capacity according to the memory address obtained by the address obtaining module.

According to the method and the device for configuring memory capacity that are provided in embodiments of the present invention, the read/write operation is performed on the data in the memory space, and the memory capacity is configured according to the memory address when the system status changes during the read/write operation, thereby implementing the configuration of the memory capacity. The system has an exception when the read/write operation is performed on a memory address which is out of the memory capacity, and the system has no exception when the read/write operation is performed on a memory address which is within the memory capacity, so when system hardware is changed, the range of the memory capacity may be obtained according to the memory address when the system status changes, so as to implement the configuration of the memory capacity, thereby reducing the operations of modifying system software and the complexity of the operations.

### BRIEF DESCRIPTION OF THE DRAWINGS

To make the technical solutions according to the embodiments of the present invention clearer, the accompanying drawings for describing the embodiments or the prior art are given briefly below. Apparently, the accompanying drawings in the following description are some embodiments of the present invention, and persons skilled in the art may derive other drawings from the accompanying drawings without creative efforts.

FIG. 1 is a flowchart of a method for configuring memory capacity according to Embodiment 1 of the present invention;

FIG. 2 is a flowchart of a method for configuring memory capacity according to Embodiment 2 of the present invention;

FIG. 3 is a flowchart of a method for configuring memory capacity according to Embodiment 3 of the present invention;

FIG. 4 is a first schematic structural diagram of a device for configuring memory capacity according to Embodiment 4 of the present invention;

FIG. 5 is a first schematic structural diagram of a second read/write module in the device for configuring memory capacity shown in FIG. 4;

FIG. 6 is a second schematic structural diagram of a second read/write module in the device for configuring memory capacity shown in FIG. 4;

FIG. 7 is a second schematic structural diagram of a device for configuring memory capacity according to Embodiment 4 of the present invention; and

FIG. 8 is a third schematic structural diagram of a device for configuring memory capacity according to Embodiment 4 of the present invention.

### DETAILED DESCRIPTION OF THE EMBODIMENTS

The technical solutions according to the embodiments of the present invention are clearly and completely described in the following with reference to the accompanying drawings of the embodiments of the present invention. It is obvious that the embodiments to be described are a part rather than all of the embodiments of the present invention. All other embodiments obtained by persons skilled in the art based on the embodiments of the present invention without creative efforts shall fall within the protection scope of the present invention.

In order to solve the problem of complex operation of the method for configuring memory capacity in the prior art, embodiments of the present invention provide a method and a device for configuring memory capacity.

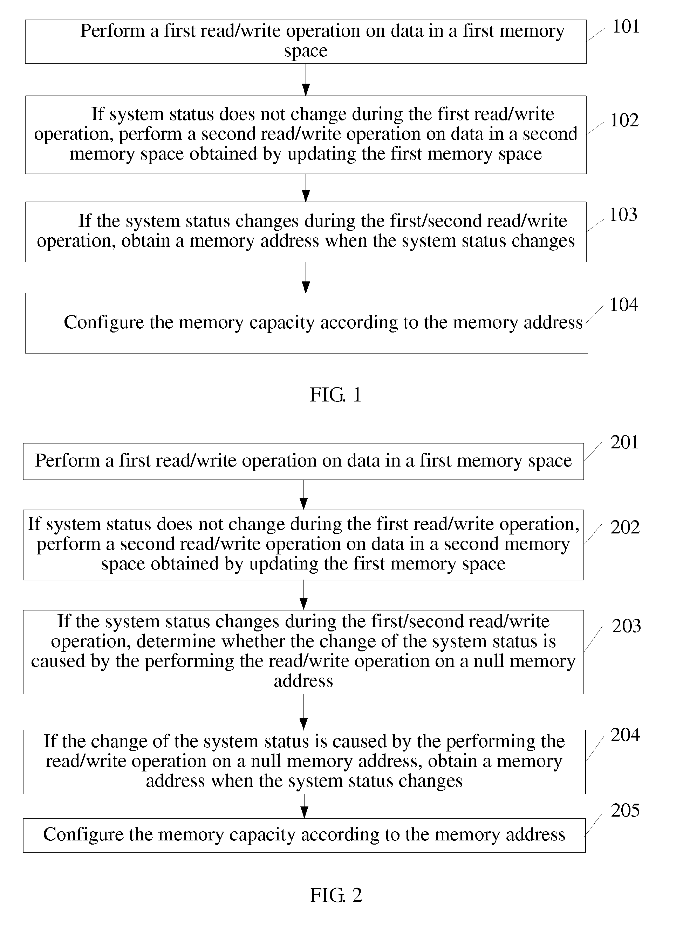

As shown in FIG. 1, a method for configuring memory capacity provided in Embodiment 1 of the present invention includes:

Step 101: Perform a first read/write operation on data in a first memory space.

In this embodiment, the first memory space in step 101 may be obtained by a system randomly either from low addresses of a memory space or from high addresses of the memory space, which is not elaborated here.

In this embodiment, the first read/write operation may be performed on data of all addresses in the first memory space through step 101; or the read/write operation is performed on data of addresses 2ⁿ in the first memory space according to a memory address rule, which are not elaborated here. Preferably, the read/write operation may also be performed on data of a starting address and an end address in the first memory space through step 101 at first. If system status does not change, through step 102, a second read/write operation is performed on data in a second memory space obtained by updating the first memory space; and if the system status changes, the read/write operation continues to be performed on data of other addresses in the first memory space.

Step 102: If system status does not change during the first read/write operation, perform a second read/write operation on data in the second memory space obtained by updating the first memory space.

In this embodiment, in step 102, the system status not changing during the first read/write operation may be that during the process of performing the first read/write operation on the first memory space through step 101, the system persistently throws an exception; or that during the process of performing the first read/write operation on the first memory space through step 101, the system does not throw an exception, which is not limited here.

During the process of performing the first read/write operation on the first memory space through step 101, if the system throws the exception, the system may be halted or even crashed. In order to avoid a system crash, when the system throws the exception, information of an address, on which the read/write operation is performed when the system throws the exception, is recorded, and the system may continue to perform the first read/write operation on other addresses in the first memory space through a central processor controllable jump operation, where the controllable jump operation may be that the system automatically resets when the system throws the exception, or other jump operations that can be controlled by the central processor, which are not elaborated here.

In this embodiment, during the process of performing the first read/write operation on the data in the first memory space through step 101, if the system throws the exception and the system status does not change, the second read/write operation may be performed through step 102 on the second memory space obtained by updating the first memory space; or when the system throws the exception and the status does not change, it is determined whether the exception of the system status is caused by the performing the read/write operation on a null memory address, and if the system throwing the exception is caused by the performing the read/write operation on a null memory address, the second read/write operation may be performed through step 102 on the second memory space obtained by updating the first memory space.

A process of obtaining the second memory space by updating the first memory space may include: obtaining the second memory space, where a starting address of the second memory space is lower than the starting address of the first memory space. The second memory space and the first memory space may have a common memory address, or have no common memory address, which is not limited here. Preferably, the starting address of the first memory space may be served as an end address of the second memory space.

In this embodiment, during the process of performing the first read/write operation on the data in the first memory space through step 101, if the system throws the exception and the system status does not change, at first, the first memory space is updated to the second memory space through the foregoing process; and then the second read/write operation is performed on the data in the second memory space through step 102. During the process of performing the read/write operation on the data in the second memory space, if the system continues to throw the exception and the status does not change, the second memory space is updated again, till the system does not throw the exception. During the process of performing the read/write operation on the data in the second memory space, if the system does not throw the exception and the system status does not change, the second memory space may be updated. The starting address of the first memory space is served as an end address of an updated second memory space, and the end address of the second memory space is served as a starting address of the updated second memory space. Then, read/write is performed on data in the updated second memory space through step 102. During the process of performing the read/write operation on the data in the second memory space, if the system status changes, a memory address when the system status changes may be directly obtained from the second memory space through step 103, in which the change may be from that the system throws the exception to that the system does not throw the exception, or from that the system does not throw the exception to that the system throws the exception, which is not limited here. A process of performing the read/write operation on the second memory space is similar to the process of performing the read/write operation on the first memory space in step 101, which is not elaborated here.

In this embodiment, during the process of performing the first read/write operation on the data in the first memory space through step 101, if the system does not throw the exception and the system status does not change, the second read/write operation may be performed, through step 102, on the second memory space obtained by updating the first memory space. A process of obtaining the second memory space by updating the first memory space may include: obtaining the second memory space, where an end address of the second memory space is higher than the end address of the first memory space. The second memory space and the first memory space may have a common memory address, or have no common memory address, which is not limited here. Preferably, the end address of the first memory space may be served as a starting address of the second memory space.

In this embodiment, during the process of performing the first read/write operation on the data in the first memory space through step 101, if the system does not throw the exception and the system status does not change, at first, the first memory space is updated to the second memory space through the foregoing process; and then the second read/write operation is performed on the data in the second memory space through step 102. During the process of performing the read/write operation on the data in the second memory space, if the system continues to throw no exception and the status does not change, the second memory space is updated again, till the system throws the exception. During the process of performing the read/write operation on the data in the second memory space, if the system throws the exception and the status does not change, the second memory space may be updated. The end address of the first memory space is served as a starting address of an updated second memory space, and the starting address of the second memory space is served as an end address of the updated second memory space. Then, read/write is performed on data in the updated second memory space through step 102. During the process of performing the read/write operation on the data in the second memory space, if the system status changes, a memory address when the system status changes may be directly obtained from the second memory space through step 103, in which the change may be from that the system throws the exception to that the system does not throw the exception, or from that the system does not throw the exception to that the system throws the exception, which is not limited here. A process of performing the read/write operation on the second memory space is similar to the process of performing the read/write operation on the first memory space in step 101, which is not elaborated here.

Step 103: If the system status changes during the first/second read/write operation, obtain a memory address when the system status changes.

In this embodiment, in step 103, the change of the system status during the first/second read/write operation may be from that the system does not throw the exception during the first/second read/write operation to that the system throws the exception, or from that the system throws the exception during the first/second read/write operation to that the system does not throw the exception, which is not limited here.

In this embodiment, if the system status changes during the first/second read/write operation, the memory address when the system status changes may be obtained through step 103, in which the memory address is a critical address of the first/second memory space. When the read/write operation is performed on a memory space lower than the memory address in the first/second memory space, the system status does not change; and when the read/write operation is performed on a memory space higher than the memory address in the first/second memory space, the system status does not change, in which in the performing the read/write operation on the memory space lower than the memory address in the first/second memory space and the performing the read/write operation on the memory space higher than the memory address in the first/second memory space, the system status is different. Preferably, when the system status changes from not throwing the exception to throwing the exception, the memory address may be a last address when the system does not throw the exception in the first/second memory space; and when the system status changes from throwing the exception to not throwing the exception, the memory address may be a first address when the system does not throw the exception in the first/second memory space.

In this embodiment, through step 103, the memory address when the system status changes may be directly obtained; or it may be determined first whether the change of the system status is caused by the performing the read/write operation on a null memory address, and when the change of the system status is caused by the performing the read/write operation on a null memory address, the memory address when the system status changes is obtained through step 103.

Step 104: Configure the memory capacity according to the memory address.

In this embodiment, as the saving in the memory is started from a low address, the memory address obtained through step 103 may be served as a maximum value of the memory capacity.

According to the method for configuring memory capacity provided in the embodiment of the present invention, the read/write operation is performed on the data in the memory space, and the memory capacity is configured according to the memory address when the system status changes during the read/write operation, thereby implementing the configuration of the memory capacity. The system has an exception when the read/write operation is performed on a memory address which is out of the memory capacity, and the system has no exception when the read/write operation is performed on a memory address which is within the memory capacity, so when system hardware is changed, the range of the memory capacity may be obtained according to the memory address when the system status changes, so as to implement the configuration of the memory capacity, thereby reducing the operations of modifying system software and the complexity of the operations. Through the technical solution provided in the embodiment of the present invention, the problem in the prior art that, when system hardware is changed, system software needs to be modified correspondingly in order to read information provided by a changed hardware interface and that the operation is complex, is solved.

As shown in FIG. 2, a method for configuring memory capacity provided in Embodiment 2 of the present invention includes:

Step 201 to Step 202: Perform a first read/write operation on data in a first memory space, and if a system status does not change during the first read/write operation, perform a second read/write operation on data in a second memory space obtained by updating the first memory space. For a specific process, reference may be made to step 101 to step 102 shown in FIG. 1, which is not elaborated here.

Step 203: If the system status changes during the first/second read/write operation, determine whether the change of the system status is caused by the performing the read/write operation on a null memory address.

In this embodiment, array subscript overwriting may also cause the system to throw an exception, so when the system status changes, it may be determined first through step 203 whether the change of the system status is caused by the performing the read/write operation on a null memory address.

If during the first/second read/write operation, the system status changes from throwing the exception to not throwing the exception, in this case, it may be determined through step 203 whether the system throwing the exception is caused by the performing the read/write operation on a null memory address, if it is caused by the performing the read/write operation on a null memory address, when the system does not throw the exception, a memory address when the system status changes is obtained through step 204; and if it is not caused by the performing the read/write operation on a null memory address, a memory address when the system throws the exception, which is not caused by the performing the read/write operation on a null memory address, is obtained, and the memory address is served as a memory address when the system status changes in step 204.

If during the first/second read/write operation, the system status changes from not throwing the exception to throwing the exception, in this case, it may be determined through step 203 whether the system throwing the exception is caused by the performing the read/write operation on a null memory address, if it is caused by the performing the read/write operation on a null memory address, when the system throws the exception, a memory address when the system status changes is obtained through step 204; and if it is not caused by the performing the read/write operation on a null memory address, the system continues the read/write operation, till the system throws the exception which is caused by the performing the read/write operation on a null memory address.

In this embodiment, in order to determine through step 203 whether the change of the system status is caused by the performing the read/write operation on a null memory address, a flag bit may be set in the system to save a situation in which the system throws the exception; when the flag bit is valid, it indicates that the change of the system status is caused by the performing the read/write operation on a null memory address; and when the flag bit is invalid, it indicates that the change of the system status is not caused by the performing the read/write operation on a null memory address.

Step 204: If the change of the system status is caused by the performing the read/write operation on a null memory address, obtain a memory address when the system status changes.

In this embodiment, the memory address when the system status changes is obtained through step 204, in which the memory address is a critical address of the first/second memory space. When the read/write operation is performed on a memory space lower than the memory address in the first/second memory space, the system status does not change; and when the read/write operation is performed on a memory space higher than the memory address in the first/second memory space, the system status does not change, in which in the performing the read/write operation on the memory space lower than the memory address in the first/second memory space and the performing the read/write operation on the memory space higher than the memory address in the first/second memory space, the system status is different. Preferably, when the system status is changed from not throwing the exception to throwing the exception, the memory address may be a last address when the system does not throw the exception in the first/second memory space; and when the system status is changed from throwing the exception to not throwing the exception, the memory address may be a first address when the system does not throw the exception in the first/second memory space.

Step 205: Configure the memory capacity according to the memory address.

In this embodiment, as the saving in the memory is started from a low address, the memory address obtained through step 205 may be served as a maximum value of the memory capacity.

According to the method for configuring memory capacity provided in the embodiment of the present invention, the read/write operation is performed on the data in the memory space, and the memory capacity is configured according to the memory address when the system status changes during the read/write operation, thereby implementing the configuration of the memory capacity. The system is has an exception when the read/write operation is performed on a memory address which is out of the memory capacity, and the system has no exception when the read/write operation is performed on a memory address which is within the memory capacity, so when system hardware is changed, the range of the memory capacity may be obtained according to the memory address when the system status changes, so as to implement the configuration of the memory capacity, thereby reducing the operations of modifying system software and the complexity of the operations. Through the technical solution provided in the embodiment of the present invention, the problem in the prior art that, when system hardware is changed, system software needs to be modified correspondingly in order to read information provided by a changed hardware interface and that the operation is complex, is solved.

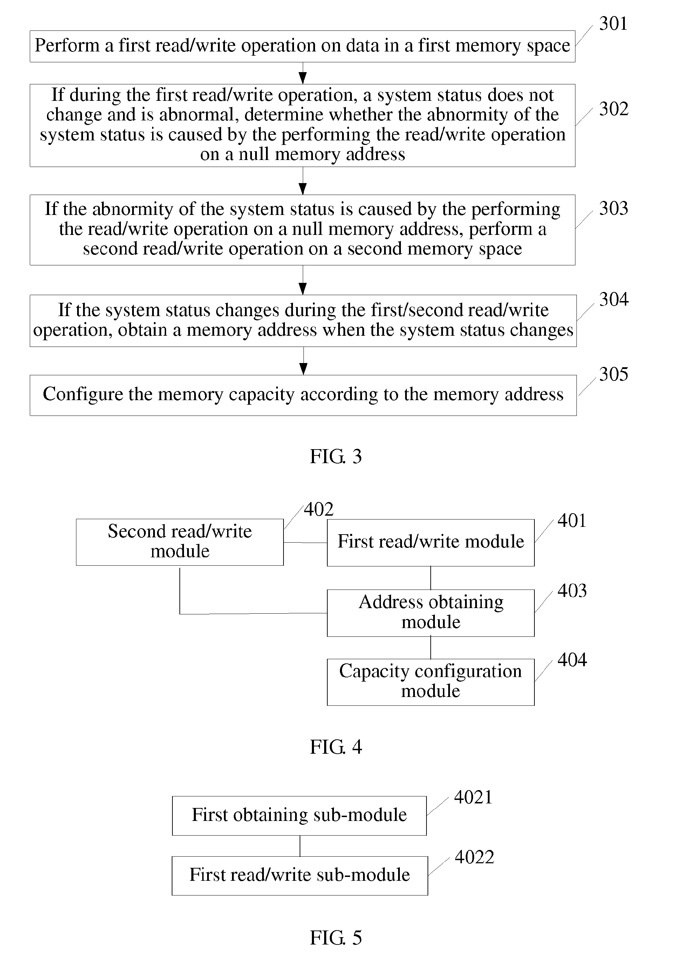

As shown in FIG. 3, a method for configuring memory capacity provided in Embodiment 3 of the present invention includes:

Step 301: Perform a first read/write operation on data in a first memory space. For a specific process, reference may be made to step 101 shown in FIG. 1, which is not elaborated here.

Step 302: If during the first read/write operation, a system status does not change and has an exception, determine whether the exception of the system status is caused by the performing the read/write operation on a null memory address.

In this embodiment, as array subscript overwriting may also cause the system to throw an exception, when the system status changes, it may be determined first through step 302 whether the exception of the system status is caused by the performing the read/write operation on a null memory address; if the exception of the system status is caused by the performing the read/write operation on a null memory address, a second read/write operation is performed on a second memory space through step 303; and if the exception of the system status is not caused by the performing the read/write operation on a null memory address, a memory address when the system throws the exception, which is not caused by the performing the read/write operation on a null memory address, is obtained, and the memory address is served as a memory address when the system status changes in step 304.

Step 303: If the exception of the system status is caused by the performing the read/write operation on a null memory address, perform the second read/write operation on a second memory space.

In this embodiment, for a specific process of performing the second read/write operation on the second memory space through step 303, reference may be made to step 102 shown in FIG. 1, which is not elaborated here.

Step 304 to Step 305: If the system status changes during the first/second read/write operation, obtain a memory address when the system status changes, and configure the memory capacity according to the memory address. For a specific process, reference may be made to step 103 to step 104 shown in FIG. 1, which is not elaborated here.

In this embodiment, if it is determined through step 302 that the exception of the system status is not caused by the performing the read/write operation on a null memory address, in this case, the memory address when the system status changes in step 304 is a memory address when the system throws the exception which is not caused by the performing the read/write operation on a null memory address.

According to the method for configuring memory capacity provided in the embodiment of the present invention, the read/write operation is performed on the data in the memory space, and the memory capacity is configured according to the memory address when the system status changes during the read/write operation, thereby implementing the configuration of the memory capacity. The system has an exception when the read/write operation is performed on a memory address which is out of the memory capacity, and the system has no exception when the read/write operation is performed on a memory address which is within the memory capacity, so when system hardware is changed, the range of the memory capacity may be obtained according to the memory address when the system status changes, so as to implement the configuration of the memory capacity, thereby reducing the operations of modifying system software and the complexity of the operations. Through the technical solution provided in the embodiment of the present invention, the problem in the prior art that, when system hardware is changed, system software needs to be modified correspondingly in order to read information provided by a changed hardware interface and that the operation is complex, is solved.

As shown in FIG. 4, a device for configuring memory capacity provided in Embodiment 4 of the present invention includes:

A first read/write module 401, adapted to perform a first read/write operation on data in a first memory space.

In this embodiment, in the first read/write module 401, the first memory space may be obtained by a system randomly either from low addresses of a memory space or from high addresses of the memory space, which is not elaborated here.

In this embodiment, the first read/write module 401 may perform the first read/write operation on data of all addresses in the first memory space, or perform the read/write operation on data of addresses 2ⁿ in the first memory space according to a memory address rule, which are not elaborated here. Preferably, the first read/write module 401 may also perform the read/write operation on data of a starting address and an end address of the first memory space first. If system status does not change, a second read/write module 402 performs a second read/write operation on data in a second memory space obtained by updating the first memory space; if the system status changes, the read/write operation continues to be performed on data of other addresses in the first memory space.

The second read/write module 402, adapted to, if system status does not change during the process of performing the first read/write operation by the first read/write module, perform a second read/write operation on data in a second memory space obtained by updating the first memory space.

In this embodiment, in the second read/write module 402, the system status being not changed during the first read/write operation may be that during the process of performing the first read/write operation on the first memory space by the first read/write module 401, the system persistently throws an exception; or that during the process of performing the first read/write operation on the first memory space by the first read/write module 401, the system does not throw the exception, which is not limited here. During the process of performing the first read/write operation on the first memory space by the first read/write module 401, if the system throws the exception, the system may be halted or even crashed. In order to avoid a system crash, when the system throws the exception, information of an address, on which the read/write operation is performed when the system throws the exception, is recorded, and the system may continues to perform the first read/write operation on other addresses in the first memory space through a central processor controllable jump operation, where the controllable jump operation may be that the system automatically resets when the system throws the exception, or other jump operations able to be controlled by the central processor, which are not elaborated here.

In this embodiment, during the process of performing the first read/write operation on the data in the first memory space by the first read/write module 401, if the system throws the exception and the system status does not change, the second read/write module 402 may perform the second read/write operation on the second memory space obtained by updating the first memory space, or when the system throws the exception and the system status does not change, determine a reason why the system throws the exception. If the system throwing the exception is caused by the performing the read/write operation on a null memory address, the second read/write module 402 performs the second read/write operation on the second memory space obtained by updating the first memory space. A process of obtaining the second memory space by updating the first memory space may include: obtaining the second memory space, where a starting address of the second memory space is lower than a starting address of the first memory space. The second memory space and the first memory space may have a common memory address, or have no common memory address, which is not limited here. Preferably, the starting address of the first memory space may be served as an end address of the second memory space.

In this embodiment, during the process of performing the first read/write operation on the data in the first memory space by the first read/write module 401, if the system throws the exception and the system status does not change, at first, the first memory space is updated to the second memory space through the foregoing process; and then the second read/write module 402 performs the second read/write operation on the data in the second memory space. During the process of performing the read/write operation on the data in the second memory space, if the system continues to throw the exception and the status does not change, the second memory space is updated again, till the system does not throw the exception. During the process of performing the read/write operation on the data in the second memory space, if the system does not throw the exception and the system status does not change, the second memory space may be updated. The starting address of the first memory space is served as an end address of an updated second memory space, and the end address of the second memory space is served as a starting address of the updated second memory space. Then, the second read/write module 402 performs read/write on data in the updated second memory space. During the process of performing the read/write operation on the data in the second memory space, if the system status changes, an address obtaining module 403 may directly obtain a memory address when the system status changes from the second memory space, in which the change may be from that the system throws the exception to that the system does not throw the exception, or from that the system does not throw the exception to that the system throws the exception, which is not limited here. A process of performing the read/write operation on the second memory space is similar to the process of performing the read/write operation on the first memory space by the first read/write module 401, which is not elaborated here.

In this embodiment, during the process of performing the first read/write operation on the data in the first memory space by the first read/write module 401, if the system does not throw the exception and the system status does not change, the second read/write module 402 performs the second read/write operation on the second memory space obtained by updating the first memory space. A process of obtaining the second memory space by updating the first memory space may include: obtaining the second memory space, where an end address of the second memory space is higher than the end address of the first memory space. The second memory space and the first memory space may have a common memory address, or have no common memory address, which is not limited here. Preferably, the end address of the first memory space may be served as a starting address of the second memory space.

In this embodiment, during the process of performing the first read/write operation on the data in the first memory space by the first read/write module 401, if the system does not throw the exception and the system status does not change, at first, the first memory space is updated to the second memory space through the foregoing process; and then the second read/write module 402 performs the second read/write operation on the data in the second memory space. During the process of performing the read/write operation on the data in the second memory space, if the system continues to throw no exception and the status does not change, the second memory space is updated again, till the system throws the exception. During the process of performing the read/write operation on the data in the second memory space, if the system throws the exception and the status does not change, the second memory space may be updated. The end address of the first memory space is served as a starting address of an updated second memory space, and the starting address of the second memory space is served as an end address of the updated second memory space. Then, the second read/write module 402 performs read/write on data in the updated second memory space through step 102. During the process of performing the read/write operation on the data in the second memory space, if the system status changes, the address obtaining module 403 may directly obtain a memory address when the system status changes from the second memory space, in which the change may be from that the system throws the exception to that the system does not throw the exception, or from that the system does not throw the exception to that the system throws the exception, which is not limited here. A process of performing the read/write operation on the second memory space is similar to the process of performing the read/write operation on the first memory space by the first read/write module 401, which is not elaborated here.

The address obtaining module 403, adapted to, if the system status changes during the first/second read/write operation, obtain a memory address when the system status changes.

In this embodiment, in the address obtaining module 403, the change of the system status during the first/second read/write operation may be from that the system does not throw the exception during the first/second read/write operation to that the system throws the exception, or from that the system throws the exception during the first/second read/write operation to that the system does not throw the exception, which is not limited here.

In this embodiment, if the system status changes during the first/second read/write operation, the memory address when the system status changes may be obtained by the address obtaining module 403, in which the memory address is a critical address of the first/second memory space. When the read/write operation is performed on a memory space lower than the memory address in the first/second memory space, the system status does not change; and when the read/write operation is performed on a memory space higher than the memory address in the first/second memory space, the system status does not change, in which in the performing the read/write operation on the memory space lower than the memory address in the first/second memory space and the performing the read/write operation on the memory space higher than the memory address in the first/second memory space, the system status is different. Preferably, when the system status changes from not throwing the exception to throwing the exception, the memory address may be a last address when the system does not throw the exception in the first/second memory space; and when the system status changes from throwing the exception to not throwing the exception, the memory address may be a first address when the system does not throw the exception in the first/second memory space.

In this embodiment, the address obtaining module 403 may directly obtain the memory address when the system status changes. Alternatively, a reason why the system status changes may be determined first, and when the change of the system status is caused by the performing the read/write operation on a null memory address, the memory address when the system status changes is obtained by the address obtaining module 403.

A capacity configuration module 404, adapted to configure the memory capacity according to the memory address obtained by the address obtaining module.

In this embodiment, as the saving in the memory is started from a low address, the memory address obtained by the address obtaining module 403 may be served as a maximum value of the memory capacity.

In addition, as shown in FIG. 5, in this embodiment, the second read/write module 402 may further include:

A first obtaining sub-module 4021, adapted to, if during the first read/write operation the system has no exception and the status does not change, obtain the second memory space, in which the end address of second memory space is higher than the end address of the first memory space.

In this embodiment, the second memory space obtained by the first obtaining sub-module 4021 and the first memory space may have a common memory address, or have no common memory address, which is not limited here. Preferably, the starting address of the first memory space may be the end address of the second memory space.

A first read/write sub-module 4022, adapted to perform the second read/write operation on the data in the second memory space obtained by the first obtaining sub-module.

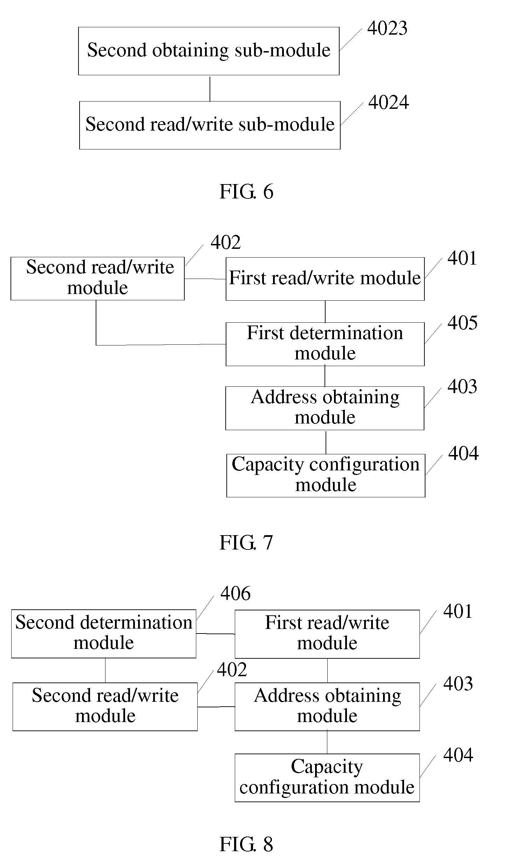

In addition, as shown in FIG. 6, in this embodiment, the second read/write module 402 may further include:

A second obtaining sub-module 4023, adapted to, if during the first read/write operation the system has an exception and the status does not change, obtain the second memory space, in which the starting address of the second memory space is lower than the starting address of the first memory space.

In this embodiment, the second memory space obtained by the second obtaining sub-module 4023 and the first memory space may have a common memory address, or have no common memory address, which is not limited here. Preferably, the end address of the first memory space may be served as the starting address of the second memory space.

A second read/write sub-module 4024, adapted to perform the second read/write operation on the second memory space obtained by the second obtaining sub-module.

In addition, as shown in FIG. 7, in this embodiment, the device for obtaining memory capacity may further include:

A first determination module 405, adapted to, if the system status changes during the first/second read/write operation, determine whether the change of the system status is caused by the performing the read/write operation on a null memory address.

In this embodiment, array subscript overwriting may also cause the system to throw an exception, so when the system status changes, it may be determined first by the first determination module 405 whether the change of the system status is caused by the performing the read/write operation on a null memory address. If during the first/second read/write operation, the system status changes from throwing the exception to not throwing the exception, in this case, the first determination module 405 determines whether the system throwing the exception is caused by the performing the read/write operation on a null memory address, if it is caused by the performing the read/write operation on a null memory address, when the system does not throw the exception, a memory address when the system status changes is obtained by the address obtaining module 403; and if it is not caused by the performing the read/write operation on a null memory address, a memory address when the system throws the exception, which is not caused by the performing the read/write operation on a null memory address, is obtained, and the memory address is served as a memory address when the system status changes in the address obtaining module 403. If during the first/second read/write operation, the system status changes from not throwing the exception to throwing the exception, in this case, the first determination module 405 may determine whether the system throwing the exception is caused by the performing the read/write operation on a null memory address, if it is caused by the performing the read/write operation on a null memory address, when the system throws the exception, a memory address when the system status changes is obtained by the address obtaining module 403; and if it is not caused by the performing the read/write operation on a null memory address, the system continues the read/write operation, till the system throws the exception which is caused by the performing the read/write operation on a null memory address.

In this embodiment, in order to determine, by the first determination module 405, whether the change of the system status is caused by the performing the read/write operation on a null memory address, a flag bit may be set in the system to save a situation in which the system throws the exception; when the flag bit is valid, it indicates that the change of the system status is caused by the performing the read/write operation on a null memory address; and when the flag bit is invalid, it indicates that the change of the system status is not caused by the performing the read/write operation on a null memory address.

The address obtaining module 403, adapted to, if the first determination module determines that the change of the system status is caused by the performing the read/write operation on a null memory address, obtain a memory address when the system status changes.

In this embodiment, the memory address when the system status changes is obtained by the address obtaining module 403, in which the memory address is a critical address of the first/second memory space. When the read/write operation is performed on a memory space lower than the memory address in the first/second memory space, the system status does not change; and when the read/write operation is performed on a memory space higher than the memory address in the first/second memory space, the system status does not change, in which in the performing the read/write operation on the memory space lower than the memory address in the first/second memory space and the performing the read/write operation on the memory space higher than the memory address in the first/second memory space, the system status is different. Preferably, when the system status changes from not throwing the exception to throwing the exception, the memory address may be a last address when the system does not throw the exception in the first/second memory space; and when the system status changes from throwing the exception to not throwing the exception, the memory address may be a first address when the system does not throw the exception in the first/second memory space.

In this embodiment, as shown in FIG. 8, if during the first read/write operation the system status does not change and has an exception, the device for configuring memory capacity provided in this embodiment may further include:

A second determination module 406, adapted to determine whether the exception of the system status is caused by the performing the read/write operation on a null memory address.

In this embodiment, array subscript overwriting may also cause the system to throw the exception, so when the system status changes, it may be determined by the second determination module 406 whether the exception of the system status is caused by the performing the read/write operation on a null memory address. If the exception of the system status is caused by the performing the read/write operation on a null memory address, the second read/write module 402 performs the second read/write operation on the second memory space; and if the exception of the system status is not caused by the performing the read/write operation on a null memory address, a memory address when the system throws the exception, which is not caused by the performing the read/write operation on a null memory address, is obtained, and the memory address is served as a memory address when the system status changes in the address obtaining module 403.

The second read/write module 402, adapted to, if the second determination module determines that the exception of the system status is caused by the performing the read/write operation on a null memory address, perform the second read/write operation on the second memory space.

According to the device for configuring memory capacity provided in the embodiment of the present invention, the read/write operation is performed on the data in the memory space, and the memory capacity is configured according to the memory address when the system status changes during the read/write operation, thereby implementing the configuration of the memory capacity. The system has an exception when the read/write operation is performed on a memory address which is out of the memory capacity, and the system has no exception when the read/write operation is performed on a memory address which is within the memory capacity, so when system hardware is changed, the range of the memory capacity may be obtained according to the memory address when the system status changes, so as to implement the configuration of the memory capacity, thereby reducing the operations of modifying system software and the complexity of the operations. Through the technical solution provided in the embodiment of the present invention, the problem in the prior art that, when system hardware is changed, system software needs to be modified correspondingly in order to read information provided by a changed hardware interface and that the operation is complex, is solved.

The method and the device for configuring memory capacity that are provided in the embodiments of the present invention may be applied in an embedded system or a computer.

In combination with the embodiments here, the described steps of the method or algorithm may be directly implemented through hardware alone or combined with a software module executed by a processor. The software module may be placed in a Random Access Memory (RAM), a memory, a Read-only Memory (ROM), an Electrically Programmable ROM, an Electrically Erasable Programmable ROM, a register, a hard disk, a removable magnetic disk, a CD-ROM, or any storage medium of other forms well-known in the technical field.

The foregoing descriptions are merely embodiments of the present invention, but not intended to limit the protection scope of the present invention. Various variations and modifications made by persons skilled in the art without departing from the spirit of the present invention should fall within the protection scope of the present invention. Therefore, the protection scope of the present invention is subject to the appended claims.

## Claims

1. A method for configuring memory capacity, comprising:
performing a first read/write operation on data in a first memory space;
if system status does not change during the first read/write operation, performing a second read/write operation on data in a second memory space obtained by updating the first memory space;
if the system status changes during the first/second read/write operation, obtaining a memory address when the system status changes; and
configuring the memory capacity according to the memory address.

2. The method for configuring memory capacity according to claim 1, wherein if the system status does not change during the first read/write operation, the performing the second read/write operation on the data in the second memory space obtained by updating the first memory space, comprises:
if the system has no exception and the system status does not change during the first read/write operation, obtaining the second memory space, wherein an end address of the second memory space is higher than an end address of the first memory space; and
performing the second read/write operation on the data in the second memory space.

3. The method for configuring memory capacity according to claim 1, wherein if the system status does not change during the first read/write operation, the performing the second read/write operation on the data in the second memory space obtained by updating the first memory space, comprises:
if the system has an exception and the system status does not change during the first read/write operation, obtaining the second memory space, wherein a starting address of the second memory space is lower than a starting address of the first memory spaces; and
performing the second read/write operation on the data in the second memory space.

4. The method for configuring memory capacity according to claim 1, wherein before obtaining the memory address when the system status changes, the method further comprises:
if the system status changes during the first/second read/write operation, determining whether a change of the system status is caused by the performing read/write operation on a null memory address; and
the obtaining the memory address when the system status changes is: if the change of the system status is caused by the performing the read/write operation on a null memory address, obtaining the memory address when the system status changes.

5. The method for configuring memory capacity according to claim 1, if the system status does not change and has an exception during the first read/write operation, comprising:
determining whether the exception of the system status is caused by the performing the read/write operation on a null memory address; and
the performing the second read/write operation on the data in the second memory space obtained by updating the first memory space is: if the exception of the system status is caused by the performing the read/write operation on a null memory address, performing the second read/write operation on the second memory space.

6. A device for configuring memory capacity, comprising:
a first read/write module, configured to perform a first read/write operation on data in a first memory space;
a second read/write module, configured to, if system status does not change during the first read/write operation performed by the first read/write module, perform a second read/write operation on data in a second memory space obtained by updating the first memory space;
an address obtaining module, configured to, if the system status changes during the first/second read/write operation, obtain a memory address when the system status changes; and
a capacity configuration module, configured to configure the memory capacity according to the memory address obtained by the address obtaining module.

7. The device for configuring memory capacity according to claim 6, wherein the second read/write module comprises:
a first obtaining sub-module, configured to, if the system has no exception and the system status does not change during the first read/write operation, obtain the second memory space, wherein an end address of second memory space is higher than an end address of the first memory space; and
a first read/write sub-module, configured to, perform the second read/write operation on the data in the second memory space obtained by the first obtaining sub-module.

8. The device for configuring memory capacity according to claim 6, wherein the second read/write module comprises:
a second obtaining sub-module, configured to, if the system has an exception and the system status does not change during the first read/write operation, obtain the second memory space, wherein a starting address of the second memory space is lower than a starting address of the first memory space; and
a second read/write sub-module, configured to, perform the second read/write operation on the data in the second memory space obtained by the second obtaining sub-module.

9. The device for configuring memory capacity according to claim 6, further comprising:
a first determination module, configured to, if the system status changes during the first/second read/write operation, determine whether a change of the system status is caused by the performing the read/write operation on a null memory address; and
the address obtaining module, further configured to, if the first determination module determines that the change of the system status is caused by the performing the read/write operation on a null memory address, obtain the memory address when the system status changes.

10. The device for configuring memory capacity according to claim 6, wherein if a system status does not change and has an exception during the first read/write operation, the device further comprises:
a second determination module, configured to determine whether the exception of the system status is caused by the performing the read/write operation on a null memory address; and
a second read/write module, configured to, if the second determination module determines that the exception of the system status is caused by the performing the read/write operation on a null memory address, perform the second read/write operation on the second memory space.
